# EUROPEAN PATENT SPECIFICATION

(11) **EP 4 149 057 B1**
(45) Date of publication and mention of the grant of the patent: **11.06.2025**
(21) Application number: 21942411.6
(22) Date of filing: 28.05.2021
(51) Int. Cl.: H04L 12/18

(54) **IN-SITU FLOW INFORMATION TELEMETRY METHOD AND ELECTRONIC DEVICE**
IN-SITU-FLUSSINFORMATIONSTELEMETRIEVERFAHREN UND ELEKTRONISCHE VORRICHTUNG
PROCÉDÉ DE TÉLÉMESURE D'INFORMATIONS DE FLUX IN SITU ET DISPOSITIF ÉLECTRONIQUE

(43) Date of publication of application: 15.03.2023
(73) Proprietor: New H3C Technologies Co., Ltd., Hangzhou, Zhejiang 310052 (CN)
(72) Inventor: QIU, Yuanxiang, Beijing 100102 (CN)
(74) Representative: Grünecker Patent- und Rechtsanwälte PartG mbB
(86) International application number: PCT/CN2021/096929
(87) International publication number: WO 2022/246837

(56) References cited:
- EP-A1- 3 579 517
- WO-A1-2018/177437
- WO-A1-2020/244651
- WO-A1-2021/047310
- CN-A- 104 067 559
- CN-A- 106 161 128
- J XIE ET AL: "Network Working Group Encapsulation for BIER in Non-MPLS IPv6 Networks draft-xie-bier-6man-encapsulation-02", NETWORK WORKING GROUP INTERNET-DRAFT, 1 September 2018 (2018-09-01), pages 1 - 11, XP055765700, Retrieved from the Internet <URL:https://tools.ietf.org/pdf/draft-xie-bier-6man-encapsulation-02.pdf> [retrieved on 20210115]
- MCBRIDE FUTUREWEI J XIE S DHANARAJ HUAWEI R ASATI CISCO M: "BIER IPv6 Requirements; draft-ietf-bier-ipv6-requirements-00.txt", 30 May 2019 (2019-05-30), pages 1 - 12, XP015133127, Retrieved from the Internet <URL:https://tools.ietf.org/html/draft-ietf-bier-ipv6-requirements-00> [retrieved on 20190530]

## Description

### TECHNICAL FIELD

The present disclosure relates to the field of network communication technologies, and in particular to in-situ flow detection methods and electronic devices for a Generalized Bit Index Explicit Replication (G-BIER) service packet based on Internet Protocol Version 6 (IPv6) multicast.

### BACKGROUND

Bit Index Explicit Replication (BIER) is a new type of multicast technology. Compared with conventional multicast technology, in the BIER multicast technology, a set of destination nodes of multicast packets is sent by encapsulating the set in a packet header in the form of bit string such that intermediate nodes in a network are not required to establish a multicast tree and store a multicast flow state for each multicast flow (Per-flow) but only required to perform replication and forwarding according to the set of the destination nodes of the packet header.

In combination with the technical advantages of IPv6 and BIER, the G-BIER based on IPv6 data plane may deploy an IP multicast service on an IPv6 network (at this time, a multicast service packet may be referred to as a G-BIER service packet). At present, service flows of a G-BIER data plane and a G-BIER control plane are already determined. But data of the G-BIER service packet such as actual packet loss rate and delay for characterizing network quality during transmission in the IPv6 network still lack a feasible measuring method.
WO 2020/244651 A1 discloses a BIER packet sending method, which includes: receiving a BIER packet that is encapsulated using a IPv6 protocol and that is sent by a second forwarding device, where the BIER packet includes an IPv6 basic header and a BIER header, a destination address field in the IPv6 basic header is a first IPv6 address of the first forwarding device; determining, based on an identifier corresponding to a first IPv6 address in a forwarding table, to perform BIER forwarding on the BIER packet, where the identifier is used to indicate that the first IPv6 address is a destination address for BIER forwarding. A node may determine, based on the identifier of the first IPv6 address, to perform BIER forwarding on the BIER packet.
WO 2021/047310 A1 discloses an IPv6 packet processing method and apparatus where a first routing device obtains an IPv6 packet, and sends the IPv6 packet to a next-hop routing device. The IPv6 packet includes an IPv6 extension header that includes preceding general indication information, where the preceding general indication information includes first information, and where the first information is used to indicate to process the IPv6 packet only on a data plane of a routing device and not to send the IPv6 packet to a CPU.
EP 3579517 A1 discloses a multicast service processing method and an access device. In the method, an access device receives an on-demand request; the access device separately sends the on-demand request to a multicast source device through a first uplink port of the access device and a second uplink port of the access device, so that the multicast source device sends a first multicast packet and a second multicast packet based on the on-demand request; the access device receives the first multicast packet through the first uplink port of the access device, and receives the second multicast packet through the second uplink port of the access device; the access device obtains a multicast data stream based on attribute information of the first multicast packet and attribute information of the second multicast packet; and the access device sends the obtained multicast data stream to the program terminal.

### SUMMARY

It is therefore the object of the present invention to provide an improved in-situ detection method for a G-BIER service packet based on IPv6 multicast, and a corresponding electronic device, computer program including instructions for implementing a corresponding method and machine readable storage medium storing computer instructions that cause a processor to implement a corresponding method.
This object is solved by the subject matter of the independent claims.
Preferred embodiments are defined by the dependent claims.

An embodiment of the present disclosure provides an in-situ flow detection method and an electronic device to perform in-situ flow detection for data of a G-BIER service packet such as actual packet loss rate and delay for characterizing network quality during transmission in an IPv6 network based on a G-BIER service packet.

An embodiment of the present disclosure provides an in-situ flow detection method of a G-BIER service packet based on IPv6 multicast, which is applied to a network device. The method includes:
when the network device serves as a bit forwarding ingress router (BFIR) of a G-BIER domain,
forwarding the G-BIER service packet in the G-BIER domain when receiving a raw multicast service packet to be subjected to in-situ flow detection; and
reporting detection data associated with in-situ flow detection information to a specified analyzer such that the analyzer detects network quality based on the reported detection data;
where the G-BIER service packet carries an IPv6 extension header and an IPv6 payload field; the IPv6 payload field includes the raw multicast service packet; the IPv6 extension header includes a Destination Option Header (DOH),where the DOH at least includes: a G-BIER option and an in-situ flow detection option; the G-BIER option indicates performing packet forwarding in the G-BIER domain, and the in-situ flow detection option carries an in-situ flow detection flag and the in-situ flow detection information; the in-situ flow detection flag indicates performing in-situ flow detection; the in-situ flow detection information at least includes: a Flow identity (ID), a Sequence Number, a Timestamp Received and a Timestamp Sent; the flow ID and the Sequence Number are self-defined by the BFIR and prohibited from being modified in the G-BIER domain after being self-defined; the Flow ID is determined according to packet characteristics where the Flow IDs of different packets having different packet characteristics are different; the Sequence Number represents a packet forwarding sequence of packets having same packet characteristics; the Timestamp Received indicates a timestamp of receiving a packet; and the Timestamp Sent indicates a timestamp of sending a packet.

As an embodiment, the method further includes:
when the network device serves as a bit forwarding egress router (BFER) in the G-BIER domain,
recording the in-situ flow detection information carried in the in-situ flow detection option in the G-BIER service packet when receiving the G-BIER service packet;
recovering the G-BIER service packet to the raw multicast service packet to be forwarded to a multicast receiver; and
reporting a timestamp of receiving the G-BIER service packet and the detection data relating to the recorded in-situ flow detection information to the analyzer.

As an embodiment, the in-situ flow detection information further includes:
TF, indicating a timestamp format;
where the Timestamp Received and the Timestamp Sent follow the timestamp format indicated by the TF.

As an embodiment, the method further includes:
when the network device serves as an intermediate BFR device between the BFIR and BFER in the G-BIER domain,
in response to that the G-BIER in-situ flow detection is supported, updating the in-situ flow detection information carried in the in-situ flow detection option carried in the G-BIER service packet when receiving the G-BIER service packet and forwarding the updated G-BIER service packet in the G-BIER domain; and
reporting the detection data relating to the in-situ flow detection information in the in-situ flow detection option carried in the updated G-BIER service packet to the analyzer.

As an embodiment, updating the in-situ flow detection information in the in-situ flow detection option carried in the G-BIER service packet includes:
updating the Timestamp Received in the in-situ flow detection information in the in-situ flow detection option carried in the G-BIER service packet to a timestamp of receiving the G-BIER service packet; updating the Timestamp Sent in the in-situ flow detection information in the in-situ flow detection option carried in the G-BIER service packet to a timestamp of sending the updated G-BIER service packet; or,
adding the timestamp of receiving the G-BIER service packet in the Timestamp Received in the in-situ flow detection information in the in-situ flow detection option carried in the G-BIER service packet; adding the timestamp of sending the updated G-BIER service packet in the Timestamp Sent in the in-situ flow detection information in the in-situ flow detection option carried in the G-BIER service packet.

As an embodiment, the in-situ flow detection information further includes: at least one TLV, and each TLV carries at least one path detection parameter; when in-situ flow detection is used to detect network transmission delay, the path detection parameter at least includes a delay parameter; when in-situ flow detection is used to perform statistics of packet loss, the path detection parameter at least includes a number of lost packets;
updating the in-situ flow detection information in the in-situ flow detection option carried in the G-BIER service packet includes:
updating the Timestamp Received in the in-situ flow detection information in the in-situ flow detection option carried in the G-BIER service packet to a timestamp of receiving the G-BIER service packet; updating the Timestamp Sent in the in-situ flow detection information in the in-situ flow detection option carried in the G-BIER service packet to a timestamp of sending the updated G-BIER service packet, and filling at least one path detection parameter in at least one TLV; or,
adding the timestamp of receiving the G-BIER service packet in the Timestamp Received in the in-situ flow detection information in the in-situ flow detection option carried in the G-BIER service packet; adding the timestamp of sending the updated G-BIER service packet in the Timestamp Sent in the in-situ flow detection information in the in-situ flow detection option carried in the G-BIER service packet, and filling at least one path detection parameter in at least one TLV.

As an embodiment, the in-situ flow detection flag occupies 8 bits; Bit0 of the in-situ flow detection flag is a delay detection flag, and Bit1 of the in-situ flow detection flag is a packet loss detection flag; the Bit0 is the lowest bit of the in-situ flow detection flag, and the Bit1 is a bit adjacent to the Bit0 in the in-situ flow detection flag.

As an embodiment, in response to that the in-situ flow detection is Edge-to-Edge detection, the G-BIER option is before the in-situ flow detection option in the DOH; in response to that the in-situ flow detection is hop-by-hop detection, the G-BIER option is after the in-situ flow detection option in the DOH.

As an embodiment, the method further includes:
when the network device serves as an intermediate device between the BFIR and the BFER in the G-BIER domain,
in response to that the G-BIER in-situ flow detection is not supported, directly performing forwarding in the G-BIER domain according to a destination IP address of the G-BIER service packet when receiving the G-BIER service packet.

An embodiment of the present disclosure further provides an electronic device, including a processor and a machine readable storage medium; the machine readable storage medium stores machine executable instructions executable by the processor; and the processor is configured to execute the machine executable instructions to implement the steps of the above methods.

An embodiment of the present disclosure further provides a computer program including instructions executed by a computer to implement the methods according to the above embodiments of the present disclosure.

An embodiment of the present disclosure further provides a machine readable storage medium storing computer instructions, where the computer instructions are executed by a processor to implement the methods according to the above embodiments of the present disclosure.

It can be seen from the above technical solutions of the present disclosure that in the present disclosure, the BFIR in the G-BIER domain and the intermediate BFR between the BFIR and the BFER may transmit the in-situ flow detection information used for detecting network quality currently along with the G-BIER service packet, which realizes in-situ flow detection based on G-BIER service packet; at the same time, the BFIR in the G-BIER domain, the intermediate BFR between the BFIR and BFER and the BFER in the G-BIER domain may also report the detection data used for detecting network quality currently to the analyzer which finally may detect network quality based on the detection data reported by the BFIR and the BFER in the G-BIER domain and the intermediate BFR between the BFIR and the BFER. In this way, the in-situ flow detection based on G-BIER service packet can detect the data of the G-BIER service packet such as actual packet loss rate and delay for characterizing network quality during transmission in an IPv6 network.

### BRIEF DESCRIPTION OF THE DRAWINGS

FIG. 1 is a flowchart of a first method according to an embodiment of the present disclosure.
FIG. 2 is a structural diagram of a DOH according to an embodiment of the present disclosure.
FIG. 3 is a structural diagram of a G-BIER option according to an embodiment of the present disclosure.
FIG. 4 is a structural diagram of an in-situ flow detection option according to an embodiment of the present disclosure.
FIG. 5 is a schematic diagram of an in-situ flow detection flag according to an embodiment of the present disclosure.
FIG. 6 is a structural diagram of an in-situ flow detection option according to an embodiment of the present disclosure.
FIG. 7 is a structural diagram of a G-BIER service packet according to an embodiment of the present disclosure.
FIG. 8 is a flowchart of a second method according to an embodiment of the present disclosure.
FIG. 9 is a flowchart of a third method according to an embodiment of the present disclosure.
FIG. 10 is a schematic diagram of a network according to an embodiment of the present disclosure.
FIG. 11 is a structural diagram of an apparatus according to an embodiment of the present disclosure.
FIG. 12 is a structural diagram of hardware of an apparatus according to an embodiment of the present disclosure.

### DETAILED DESCRIPTION OF THE EMBODIMENTS

Embodiments will be described in detail herein, with the illustrations thereof represented in the drawings. When the following descriptions involve the drawings, like numerals in different drawings refer to like or similar elements unless otherwise indicated. The implementations described in the following embodiments do not represent all implementations consistent with the present disclosure. Rather, they are merely examples of apparatuses and methods consistent with some aspects of the present disclosure as detailed in the appended claims.

The terms used in the present disclosure are used only for the purpose of describing the specific embodiments rather than limiting the present disclosure. "A", "the" and "said" in the singular form used in the present disclosure and the appended claims are also intended to include plural unless otherwise clearly indicated in the context.

In order to help those skilled in the art to understand the technical solutions of the embodiments of the present disclosure better and make the above objects, characteristics and advantages of the embodiments of the present disclosure clearer, technical terms relating to the embodiments of the present disclosure are described below.

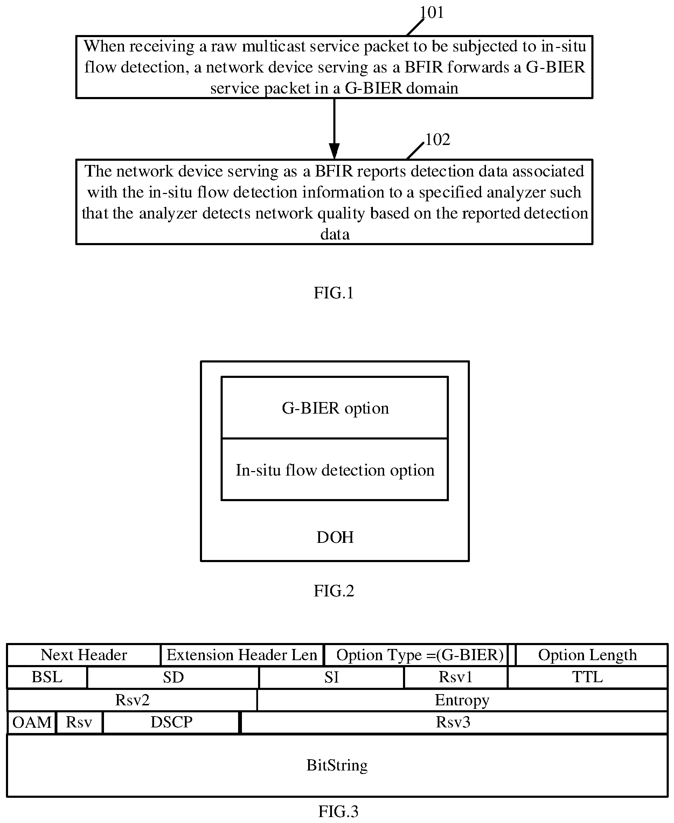

FIG. 1 is a flowchart of a first method according to an embodiment of the present disclosure. The method is applied to a network device. The network device herein may be a router, a switch and the like, which is not limited herein.

As shown in FIG. 1, the method may include the following steps.

At step 101, when receiving a raw multicast service packet to be subjected to in-situ flow detection, a network device serving as a BFIR forwards a G-BIER service packet in a G-BIER domain.

Herein, a router supporting G-BIER capability may be referred to as a Bit-Forwarding Router (BFR), and a domain formed by BFRs is called a G-BIER domain for short. The BFRs in the G-BIER domain include a Bit-Forwarding Ingress Router (BFIR), a Bit-Forwarding Egress Router (BFER), and an intermediate BFR device between the BFIR and the BFER. The raw multicast service packet enters the G-BIER domain from the BFIR. As mentioned in step 101, once receiving the raw multicast service packet, the BFIR may identify whether to perform in-situ flow detection for the raw multicast service packet based on a pre-configured in-situ flow detection manner. When it is identified that the in-situ flow detection is to be performed for the raw multicast service packet, it is considered that the raw multicast service packet is a raw multicast service packet to be subjected to in-situ flow detection. Afterwards, the G-BIER service packet may be forwarded in the G-BIER domain. Herein, the G-BIER service packet carries an IPv6 extension header and an IPv6 payload field, where the IPv6 payload field may include the raw multicast service packet.

According to IPv6 protocol, the IPv6 extension header may include at least one Destination Option Header (DOH). Optionally, as an embodiment, at least a G-BIER option and an in-situ flow detection option are added in one DOH in the IPv6 extension header, that is, the DOH in the IPv6 extension header finally at least includes: a G-BIER option and an in-situ flow detection option. Optionally, when in-situ flow detection is Edge-to-Edge detection, the G-BIER option is before the in-situ flow detection option in the DOH; when the in-situ flow detection is hop-by-hop detection, the G-BIER option is after the in-situ flow detection option in the DOH. FIG. 2 is a structure of a G-BIER option and an in-situ flow detection option in a DOH when in-situ flow detection is Edge-to-Edge detection.

Optionally, in this embodiment, the G-BIER option indicates performing packet forwarding in the G-BIER domain. FIG. 3 exemplifies a structure of a G-BIER option. The G-BIER option herein is structurally consistent with the existing defined G-BIER option, and will not be defined in this embodiment.

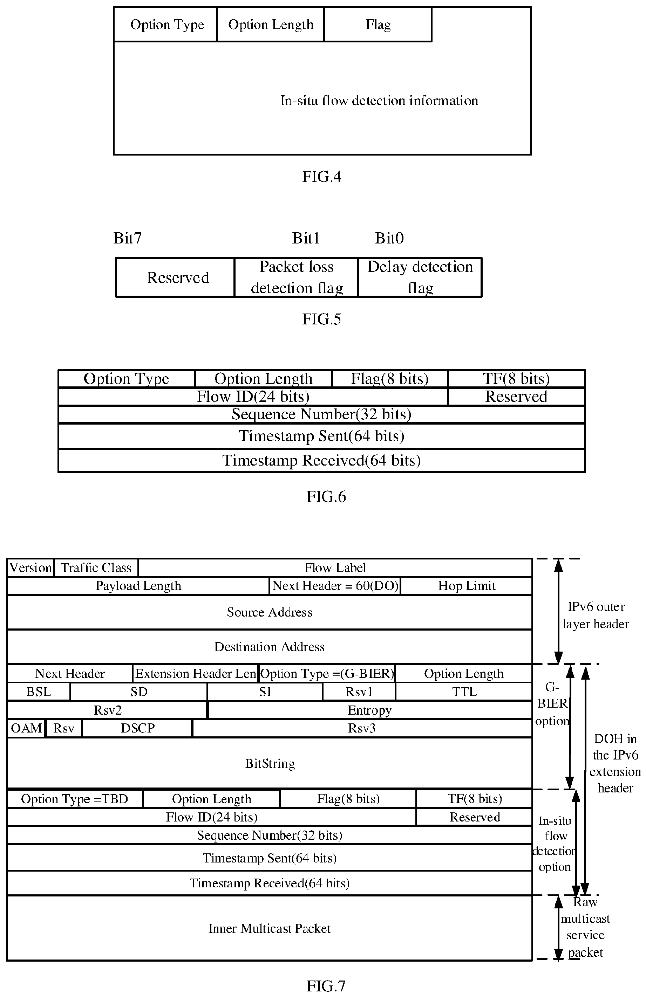

Optionally, in this embodiment, the in-situ flow detection option carries an in-situ flow detection flag and in-situ flow detection information. It is noted that the in-situ flow detection option also follows an option format, and the in-situ flow detection option further includes an Option Type and an Option Length as well as the in-situ flow detection flag and the in-situ flow detection information. The Option Type indicates an in-situ flow detection type, a value of which can be applied for to IETF. The Option Length may be a number of bytes other than the Option Type and the Option Length in the in-situ flow detection option. FIG. 4 exemplifies a structure of an in-situ flow detection option.

As an embodiment, the in-situ flow detection flag indicates that a BFR in the G-BIER domain performs in-situ flow detection. Optionally, in this embodiment, the in-situ flow detection flag may occupy 8 bits. Bit0 of the in-situ flow detection flag is a delay detection flag. For example, when Bit0 is set, it indicates that delay detection is to be performed. Herein, the Bit0 is the lowest bit of the in-situ flow detection flag as shown in FIG. 5. Generally, in one service period, under a same service characteristic, there is usually only one service packet in which Bit0 of the in-situ flow detection flag is set to indicate that delay detection is to be performed. Bit1 of the in-situ flow detection flag (a bit adjacent to the Bit0 in the in-situ flow detection flag) is a packet loss detection flag. For example, when Bit1 is set, it indicates that packet loss measurement is to be performed. In this embodiment, remaining bits of the in-situ flow detection flag may be temporarily reserved for subsequent extension use.

As an embodiment, the in-situ flow detection information at least includes a Flow ID, a Sequence Number, a Timestamp Received, and a Timestamp Sent.

The Flow ID is determined according to packet characteristics, for example, packet quintuple and the like. The Flow IDs of different packets having different packet characteristics are different. Preferably, the flow ID may occupy 24 bits. It is emphasized that in this embodiment the Flow ID in the in-situ flow detection information is different from a flow ID carried when a multicast source sends a raw multicast service packet. In this embodiment, the Flow ID in the in-situ flow detection information is self-defined by the network device serving as a BFIR and prohibited from being modified in the G-BIER domain after being self-defined.

The Sequence Number represents a packet forwarding sequence of packets having same packet characteristics. Statis of packets having different Sequence Numbers under a same Flow ID facilitate determining a packet loss rate, which will be described below by way of examples and thus will not be described redundantly herein. Optionally, the Sequence Number may occupy 32 bits. It is emphasized that in this embodiment the Sequence Number in the in-situ flow detection information is different from a Sequence Number carried when a multicast source sends a raw multicast service packet. In this embodiment, the Sequence Number in the in-situ flow detection information is self-defined by the network device serving as a BFIR and prohibited from being modified in the G-BIER domain after being self-defined.

The Timestamp Received indicates a timestamp of receiving a packet. Optionally, the Timestamp Received may occupy 64 bits.

The Timestamp Sent indicates a timestamp of sending a packet. Optionally, the Timestamp Sent may occupy 64 bits.

In this embodiment, preferably, to facilitate defining a format of the timestamps of the Timestamp Received and the Timestamp Sent, the in-situ flow detection information further includes a Time Format (TF) indicating a timestamp format, for example, a format defined by a Network Time Protocol (NTP) and a format defined by a Precision Time Protocol (PTP). It is noted that the Timestamp Received and Timestamp Sent follow the timestamp format indicated by the TF. Based on the above descriptions, FIG. 6 exemplifies a specific structure of an in-situ flow detection option.

As mentioned in the step 101, when receiving the raw multicast service packet to be subjected to in-situ flow detection, the network device serving as a BFIR of the G-BIER domain may convert the raw multicast service packet into a G-BIER service packet, and forward the G-BIER service packet in the G-BIER domain. Based on the above descriptions, FIG. 7 exemplifies a final structure of a G-BIER service packet when in-situ flow detection is Edge-to-Edge detection.

At step 102, the network device serving as a BFIR reports detection data associated with the in-situ flow detection information to a specified analyzer such that the analyzer detects network quality based on the reported detection data.

It is noted that forwarding the G-BIER service packet in the G-BIER domain in the step 101 and performing the step 102 may be carried out in any sequence, for example, may be carried out simultaneously or forwarding the G-BIER service packet in the G-BIER domain in the step 101 is carried out before the step 102 and the like, which is not limited herein.

In step 102, as an embodiment, the detection data associated with the in-situ flow detection information may be directly the in-situ flow detection information. As another embodiment, the detection data associated with the in-situ flow detection information may also be determined according to the in-situ flow detection information, for example, the detection data may be a difference between the Timestamp Sent and the Timestamp Received in the in-situ flow detection information and the like. The form of the detection data is not limited in this embodiment as long as the analyzer can detect network quality based on the reported detection data.

Thus, the flow shown in FIG. 1 is completed.

According to the flow shown in FIG.1, when receiving the raw multicast service packet to be subjected to in-situ flow detection, the network device serving as a BFIR of the G-BIER domain may convert the raw multicast service packet into the G-BIER service packet and forward the G-BIER service packet carrying the in-situ flow detection information in the G-BIER domain so as to realize in-situ flow detection of the G-BIER service packet. At the same time, the network device may also report the detection data associated with the in-situ flow detection information carried in the G-BIER service packet to the specified analyzer such that the analyzer detects network quality based on the reported detection data. In this way, the in-situ flow detection based on G-BIER service packet can detect the data of the G-BIER service packet such as actual packet loss rate and delay for characterizing network quality during transmission in an IPv6 network.

FIG. 1 describes an embodiment from the perspective of a network device serving as a BFIR. Embodiment descriptions are made below with a network device serving as an intermediate BFR between the BFIR and the BFER.

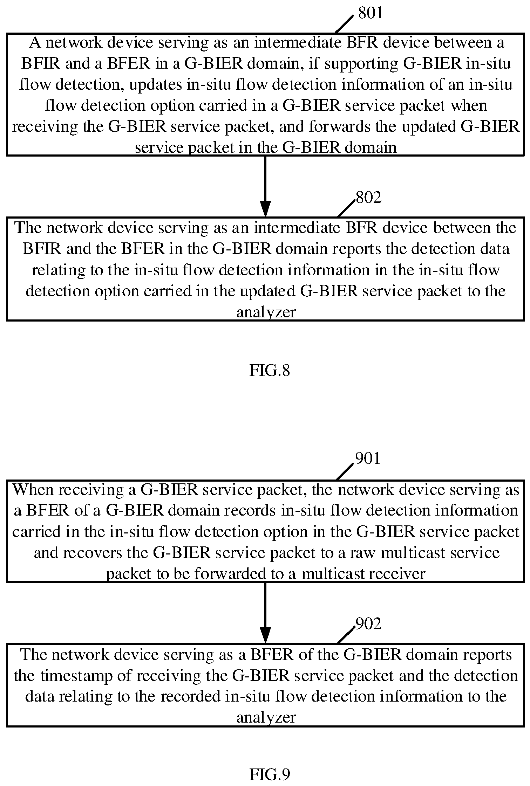

FIG. 8 is a flowchart of a second method according to an embodiment of the present disclosure. As shown in FIG. 8, the flow may include the following steps 801-802.

At step 801, a network device serving as an intermediate BFR device between a BFIR and a BFER in a G-BIER domain, if supporting G-BIER in-situ flow detection, updates in-situ flow detection information of an in-situ flow detection option carried in a G-BIER service packet when receiving the G-BIER service packet, and forwards the updated G-BIER service packet in the G-BIER domain.

The in-situ flow detection information is described as above. As an embodiment, updating the in-situ flow detection information of the in-situ flow detection option carried in the G-BIER service packet in step 801 may include: updating a Timestamp Received in the in-situ flow detection information of the in-situ flow detection option carried in the G-BIER service packet to a timestamp of receiving the G-BIER service packet; and updating a Timestamp Sent in the in-situ flow detection information of the in-situ flow detection option carried in the G-BIER service packet to a timestamp of sending the updated G-BIER service packet.

In order to ensure accuracy of the in-situ flow detection, as another embodiment, updating the in-situ flow detection information of the in-situ flow detection option carried in the G-BIER service packet in step 801 may also include: adding the timestamp of receiving the G-BIER service packet in the Timestamp Received in the in-situ flow detection information of the in-situ flow detection option carried in the G-BIER service packet, and adding the timestamp of sending the updated G-BIER service packet in the Timestamp Sent in the in-situ flow detection information of the in-situ flow detection option carried in the G-BIER service packet.

Optionally, in this embodiment, the in-situ flow detection information further includes: at least one TLV (Type-Length-Value, or denoted as TLV field). Each TLV carries other extended in-situ flow detection information, for example, a path detection parameter. For example, when the in-situ flow detection is used to detect a network transmission delay, the path detection parameter such as a delay parameter may be carried in at least one TLV; when the in-situ flow detection is used to perform statistics of packet loss, the path detection parameter such as a number of lost packets may be carried in at least one TLV. Based on this, updating the in-situ flow detection information of the in-situ flow detection option carried in the G-BIER service packet may further include: filling at least one path detection parameter detected currently in the TLVs field.

In the step 801, a network device serving as an intermediate BFR device between the BFIR and the BFER in the G-BIER domain, if supporting G-BIER in-situ flow detection, may update current real-time network quality information carried in the G-BIER service packet, for example, the in-situ flow detection information of the in-situ flow detection option carried in the G-BIER service packet when receiving the G-BIER service packet, and continue to perform forwarding in the G-BIER domain (the forwarding manner is similar to existing BIER packet forwarding and is not described redundantly), so as to realize in-situ flow detection of the G-BIER service packet in the G-BIER domain. It is noted that the network device serving as an intermediate BFR device between the BFIR and the BFER in the G-BIER domain, if not supporting G-BIER in-situ flow detection, may directly perform forwarding in the G-BIER domain based on a destination Internet Protocol (IP) address of the G-BIER service packet when receiving the G-BIER service packet.

At step 802, the network device serving as an intermediate BFR device between the BFIR and the BFER in the G-BIER domain reports the detection data relating to the in-situ flow detection information in the in-situ flow detection option carried in the updated G-BIER service packet to the analyzer.

It is noted that forwarding the G-BIER service packet in the G-BIER domain in the step 801 and performing the step 802 may be carried out in any sequence, for example, may be carried out simultaneously or forwarding the G-BIER service packet in the G-BIER domain in the step 801 is carried out before the step 802 and the like, which is not limited herein.

In step 802, as an embodiment, the detection data relating to the in-situ flow detection information in the in-situ flow detection option carried in the updated G-BIER service packet may be directly the in-situ flow detection information in the in-situ flow detection option carried in the updated G-BIER service packet, or determined according to the in-situ flow detection information, for example, the detection data may be a difference between the Timestamp Sent and the Timestamp Received in the in-situ flow detection information and the like. The form of the detection data is not limited in this embodiment as long as the analyzer can detect network quality based on the reported detection data.

Thus, the flow shown in FIG. 8 is completed.

According to the flow shown in FIG. 8, the network device serving as an intermediate BFR device between the BFIR and the BFER in the G-BIER domain, if supporting G-BIER in-situ flow detection, may update current real-time network quality information carried in the received G-BIER service packet, for example, the Timestamp Received and the Timestamp Sent and the like in the in-situ flow detection information of the in-situ flow detection option carried in the G-BIER service packet, and continue to perform forwarding in the G-BIER domain so as to realize in-situ flow detection of the G-BIER service packet in the G-BIER domain. At the same time, the network device may also report the detection data relating to the in-situ flow detection information carried in the G-BIER service packet to the specified analyzer, such that the analyzer can detect network quality based on the reported detection data. In this way, the in-situ flow detection based on G-BIER service packet can detect the data of the G-BIER service packet such as actual packet loss rate and delay for characterizing network quality during transmission in an IPv6 network.

Embodiment descriptions are made below with a network device serving as a BFER.

FIG. 9 is a flowchart of a third method according to an embodiment of the present disclosure. As shown in FIG. 9, the flow may include the following steps 901-902.

At step 901, when receiving a G-BIER service packet, the network device serving as a BFER of a G-BIER domain records in-situ flow detection information carried in the in-situ flow detection option in the G-BIER service packet and recovers the G-BIER service packet to a raw multicast service packet to be forwarded to a multicast receiver (or, a receiver of a multicast packet).

Herein, recovering the G-BIER service packet to the raw multicast service packet may include: recovering the raw multicast service packet in an IPv6 payload field by removing an IPv6 outer layer header (IPv6 basic header) and an IPv6 extension header of the G-BIER service packet.

At step 902, the network device serving as a BFER of the G-BIER domain reports the timestamp of receiving the G-BIER service packet and the detection data relating to the recorded in-situ flow detection information to the analyzer.

It is noted that forwarding the raw multicast service packet to the multicast receiver in the step 901 and performing the step 902 may be carried out in any sequence, for example, may be carried out simultaneously or forwarding the raw multicast service packet to the multicast receiver in the step 901 is carried out before the step 902 and the like, which is not limited herein.

In step 902, as an embodiment, the detection data relating to the recorded in-situ flow detection information may be directly the recorded in-situ flow detection information, or determined according to the in-situ flow detection information, for example, the detection data may be a difference between the Timestamp Sent and the Timestamp Received in the in-situ flow detection information and the like. The form of the detection data is not limited in this embodiment as long as the analyzer can detect network quality based on the reported detection data.

Thus, the flow shown in FIG. 9 is completed.

According to the flow shown in FIG.9, the network device serving as a BFER of the G-BIER domain, may report the timestamp of receiving the G-BIER service packet and the detection data relating to the recorded in-situ flow detection information to the analyzer such that the analyzer can detection network quality. In this way, the in-situ flow detection based on G-BIER service packet can detect the data of the G-BIER service packet such as actual packet loss rate and delay for characterizing network quality during transmission in an IPv6 network.

The following descriptions are made by way of one specific embodiment in combination with the flows shown in FIGS. 1, 8 and 9.

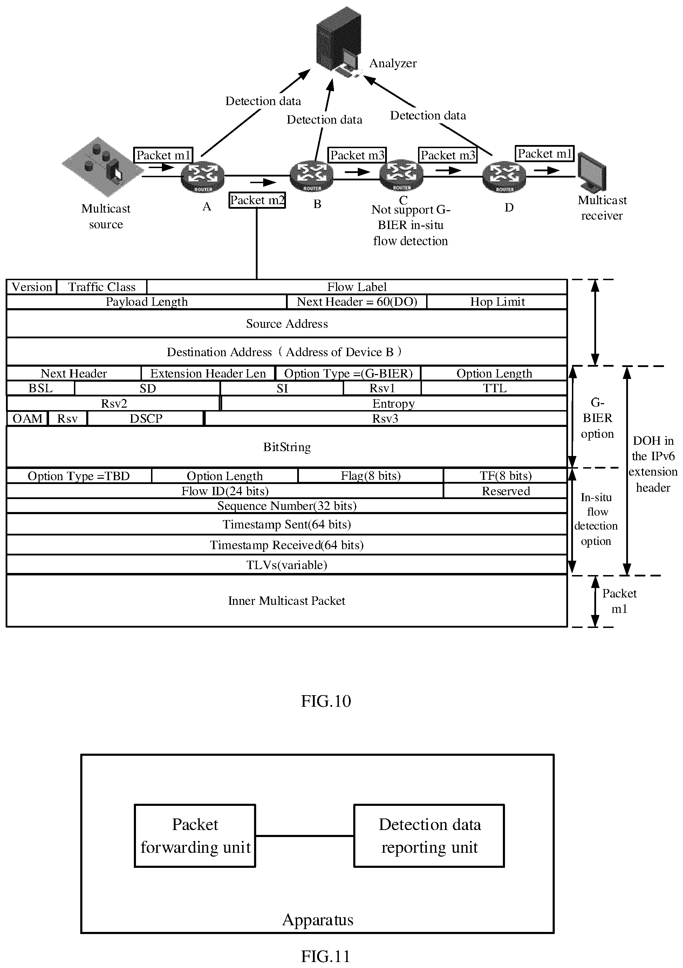

FIG. 10 is a schematic diagram of a network according to an embodiment of the present disclosure. In this embodiment, time synchronization between an analyzer and all BFRs supporting G-BIER in-situ flow detection in a G-BIER domain may be maintained based on a time synchronization protocol.

As shown in FIG. 10, a multicast source sends a raw multicast service packet (denoted as packet m1). The raw multicast service packet herein is structurally similar to the existing multicast packet and thus will not be repeated herein.

After receiving the packet m1, a device A serving as a BFIR of the G-BIER domain, analyzes packet characteristics of the packet m1, for example, Source Address and Destination Address and the like, and identifies that in-situ flow detection is to be performed for the packet m1 according to a pre-configured in-situ flow detection identification manner and based on the analyzed packet characteristics. Thus, the device A adds an IPv6 extension header at an outer layer of the packet m1 and then encapsulates an IPv6 outer layer header (also called IPv6 basic header) outside the IPv6 extension header, where the packet m1 is taken as an IPv6 payload. A Destination Option Header (DOH) in the IPv6 extension header includes a G-BIER option and an in-situ flow detection option. The G-BIER option and the in-situ flow detection option are described as above and will not be repeated herein. In this embodiment, if the in-situ flow detection is Edge-to-Edge detection, the G-BIER option is before the in-situ flow detection option in the DOH. A Destination Address in the IPv6 outer layer header is a next hop, i.e. an address of a device B. Herein, a packet formed finally by adding the IPv6 extension header at the outer layer of the packet m1 and then encapsulating the IPv6 outer layer header (also called IPv6 basic header) outside the IPv6 extension header, with the packet m1 as the IPv6 payload, is denoted as packet m2.

The device A sends the packet m2 to the next hop, i.e. the device B, and reports the in-situ flow detection information carried in the packet m2 to the analyzer at the same time.

If supporting G-BIER in-situ flow detection, the device B may, when finding that the packet m2 carries an in-situ flow detection option upon receiving the packet m2, analyze the IPv6 outer layer header and the IPv6 extension header, calculate a number of packets, and update a Timestamp Received in the in-situ flow detection information in the in-situ flow detection option carried in the packet m2 to a timestamp of receiving the packet m2; update a Timestamp Sent in the in-situ flow detection information in the in-situ flow detection option carried in the packet m2 to a timestamp of sending a packet, and fill at least one path detection parameter in the TLVs field according to the detection requirements; or, add the timestamp of receiving the packet m2 in the Timestamp Received in the in-situ flow detection information in the in-situ flow detection option carried in the packet m2; add the time stamp of sending the G-BIER service packet in the Timestamp Sent in the in-situ flow detection information in the in-situ flow detection option carried in the G-BIER service packet, and fill at least one path detection parameter in the TLVs field according to detection requirements. The path parameter herein may be a network parameter such as a delay parameter and a packet loss parameter. Afterwards, the Destination Address in the IPv6 outer layer header may be replaced with the next hop, i.e. the address of the device B. For ease of descriptions, a packet obtained finally by the device B herein is denoted as packet m3.

The device B sends the packet m3 to a next hop, i.e. a device D, and reports in-situ flow detection information carried in the packet m3 to the analyzer at the same time.

A device C does not support B-BIER. As an ordinary IPv6 router, the device C queries a route for forwarding packet m3 according to the Destination Address in the IPv6 outer layer header after receiving the packet m3.

A device D serving as a BFER may, when finding that the packet m3 carries the in-situ flow detection information upon receiving the packet m3, analyze the IPv6 outer layer header and the IPv6 extension header, calculate a number of packets, record the G-BIER option and the in-situ flow detection option in the DOH in the IPv6 extension header, and recover the packet m1 by removing the IPv6 outer layer header and the IPv6 extension header.

The device D sends the packet m1 to the multicast receiver, and reports the timestamp of receiving the packet m3 by the device D and the recorded in-situ flow detection information to the analyzer at the same time.

After receiving the data reported by the devices A, B and D, the analyzer may, for a service flow of same Flow ID, calculate time taken by the service flow to pass through each network device and determine which link is subjected to packet loss. If several sets of lost packets and several sets of delay data are tested continuously, network delay jitter may be determined.

Optionally, as an embodiment, delay may be calculated by the following method. For packets of same Flow ID and same Sequence Number, delay during transmission in the G-BIER domain can be calculated as shown in Table 1.

**Table 1**

| Measured path | Time |
|---|---|
| Processing delay of device A | Timstamp_Sent (A) - Timestamp_Received (A) |
| Link delay between device A and device B | Timestamp _Received (B) - Timstamp_Sent (A) |
| Processing delay of device B | Timstamp_Sent (B) - Timestamp _Received (B) |
| Link delay between device B and device D | Timestamp _Received (D) - Timstamp_Sent (B) |
| Processing delay of device D | Timstamp_Sent (D)- Timestamp _Received (D) |

In Table 1, Timstamp_Sent(A) represents a timestamp that the device A sends a packet, Timestamp _Received (A) represents a timestamp that the device A receives a packet, and so on. Therefore, explanation will not be made one by one.

Optionally, as an embodiment, packet loss statis may be calculated by the following method.

Statis for packets of same Flow ID and different Sequence Numbers: if statis of packets reported by the device A is Statis(A), statis of packets reported by the device B is Statis(B) and statis of packets reported by the device D is Statis(D), a number of lost packets may be calculated as shown in Table 2.

**Table 2**

| Measuring point | number of lost packets |
|---|---|
| Number of lost packets of a link between device A and device B | Statis(B) - Statis(A) |
| Number of lost packets of a link between device B and device D | Statis(D) - Statis(B) |

The packet loss rate may be calculated in the following formula. Packet loss rate = number of lost packets/ total number of packets of same Flow ID and different Sequence Numbers.

Thus, embodiment descriptions are completed. It is noted that in this embodiment, the manner in which the BFR in the G-BIER domain reports the detection data to the analyzer may be implemented based on existing telemetry technology, for example, gPRC, or Netconf or other network protocol, which is not limited herein.

The above descriptions are made to the method according to the embodiments of the present disclosure. The following descriptions will be made to an apparatus according to the embodiments of the present disclosure.

FIG. 11 is a structural diagram of an apparatus according to an embodiment of the present disclosure. The apparatus may implement the in-situ flow detection method of a G-BIER service packet based on IPv6 multicast. The apparatus is applied to a network device and may include:
a packet forwarding unit, configured to, when the network device serves as a BFIR, forward a G-BIER service packet in a G-BIER domain when receiving a raw multicast service packet to be subjected to in-situ flow detection; where the G-BIER service packet carries an IPv6 payload field and the IPv6 payload field includes the raw multicast service packet; the G-BIER service packet further carries an IPv6 extension header, DOH in the IPv6 extension header at least includes: a G-BIER option and an in-situ flow detection option; the G-BIER option indicates performing packet forwarding in the G-BIER domain, and the in-situ flow detection option carries an in-situ flow detection flag and in-situ flow detection information; the in-situ flow detection flag indicates that a BFR in the G-BIER domain performs in-situ flow detection; the in-situ flow detection information at least includes: a Flow identity (ID), a Sequence Number, a Timestamp Received and a Timestamp Sent; the flow ID and the sequence number are self-defined by the BFIR and prohibited from being modified in the G-BIER domain after being self-defined; the Flow ID is determined according to packet characteristics where the Flow IDs of different packets having different packet characteristics are different; the sequence number represents a packet forwarding sequence of packets having same packet characteristics; the Timestamp Received indicates a timestamp of receiving a packet; and the Timestamp Sent indicates a timestamp of sending a packet; and
a detection data reporting unit, configured to report detection data associated with the in-situ flow detection information to a specified analyzer, such that the analyzer can detect network quality based on the reported detection data.

Optionally, as an embodiment, the packet forwarding unit is further configured to, when the network device serves as a BFER of the G-BIER domain, record the in-situ flow detection information carried in the in-situ flow detection option in the G-BIER service packet when receiving the G-BIER service packet, and recover the G-BIER service packet to a raw multicast service packet to be forwarded to a multicast receiver.

The detection data reporting unit is further configured to report a timestamp of receiving the G-BIER service packet and the detection data relating to the recorded in-situ flow detection information to the analyzer.

Optionally, the in-situ flow detection information further includes TF indicating a timestamp format, where the Timestamp Received and the Timestamp Sent both follow the timestamp format indicated by the TF.

Optionally, the packet forwarding unit is further configured to, when the network device serves as an intermediate BFR device between the BFIR and the BFER in the G-BIER domain and supports G-BIER in-situ flow detection, update the in-situ flow detection information in the in-situ flow detection option carried in the G-BIER service packet when receiving the G-BIER service packet, and forward the updated G-BIER service packet in the G-BIER domain.

The detection data reporting unit is further configured to report the detection data relating to the in-situ flow detection information in the in-situ flow detection option carried in the updated G-BIER service packet to the analyzer.

Optionally, the packet forwarding unit updates the in-situ flow detection information in the in-situ flow detection option carried in the G-BIER service packet, which includes:
updating the Timestamp Received in the in-situ flow detection information in the in-situ flow detection option carried in the G-BIER service packet to a timestamp of receiving the G-BIER service packet; updating the Timestamp Sent in the in-situ flow detection information in the in-situ flow detection option carried in the G-BIER service packet to a timestamp of sending the updated G-BIER service packet; or,
adding the timestamp of receiving the G-BIER service packet in the Timestamp Received in the in-situ flow detection information in the in-situ flow detection option carried in the G-BIER service packet; adding the timestamp of sending the updated G-BIER service packet in the Timestamp Sent in the in-situ flow detection information in the in-situ flow detection option carried in the G-BIER service packet.

Optionally, the in-situ flow detection information further includes: at least one TLV, and each TLV carries at least one path detection parameter; when in-situ flow detection is used to detect network transmission delay, the path detection parameter at least includes a delay parameter; when in-situ flow detection is used to perform statistics of packet loss, the path detection parameter at least includes a number of lost packets.

Based on this, the packet forwarding unit updates the in-situ flow detection information in the in-situ flow detection option carried in the G-BIER service packet, which includes:
updating the Timestamp Received in the in-situ flow detection information in the in-situ flow detection option carried in the G-BIER service packet to a timestamp of receiving the G-BIER service packet; updating the Timestamp Sent in the in-situ flow detection information in the in-situ flow detection option carried in the G-BIER service packet to a timestamp of sending the updated G-BIER service packet, and filling at least one path detection parameter in at least one TLV; or,
adding the timestamp of receiving the G-BIER service packet in the Timestamp Received in the in-situ flow detection information in the in-situ flow detection option carried in the G-BIER service packet; adding the timestamp of sending the updated G-BIER service packet in the Timestamp Sent in the in-situ flow detection information in the in-situ flow detection option carried in the G-BIER service packet, and filling at least one path detection parameter in at least one TLV.

Optionally, the in-situ flow detection flag occupies 8 bits; Bit0 of the in-situ flow detection flag is a delay detection flag, and Bit1 of the in-situ flow detection flag is a packet loss detection flag; the Bit0 is the lowest bit of the in-situ flow detection flag, and the Bit1 is a bit adjacent to the Bit0 in the in-situ flow detection flag.

Optionally, when the in-situ flow detection is Edge-to-Edge detection, the G-BIER option is before the in-situ flow detection option in the DOH; when the in-situ flow detection is hop-by-hop detection, the G-BIER option is after the in-situ flow detection option in the DOH.

Optionally, the packet forwarding unit is further configured to, when the network device serves as an intermediate device between the BFIR and the BFER in the G-BIER domain and does not support G-BIER in-situ flow detection, directly perform forwarding in the G-BIER domain according to a destination IP address of the G-BIER service packet when receiving the G-BIER service packet.

At this time, the structural descriptions of the apparatus shown in FIG. 11 are completed.

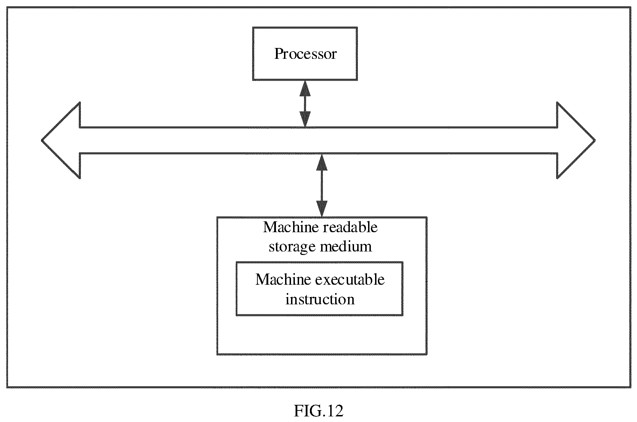

An embodiment of the present disclosure further provides a hardware structure of the apparatus shown in FIG. 11. FIG. 12 is a structural diagram of an electronic device according to an embodiment of the present disclosure. As shown in FIG. 12, the hardware structure may include: a processor and a machine readable storage medium. The machine readable storage medium stores machine executable instructions executable by the processor; and the processor is configured to execute the machine executable instructions to implement the method according to the embodiments of the present disclosure.

**Based** on the same idea as the above method, an embodiment of the present disclosure further provides a machine readable storage medium storing several computer instructions, where the computer instructions are executed by a processor to implement the method according to the above embodiments of the present disclosure.

Illustratively, the machine readable storage medium mentioned herein may be any of electronic, magnetic, optical or other physical storage devices and may contain or store information such as executable instructions, data and so on. For example, the machine readable storage medium may be a Radom Access Memory (RAM), a volatile memory, a non-volatile memory, a flash memory, a storage drive (e.g. hard disk drive), a solid state hard disk, any type of storage disk (e.g., compact disk, Digital Video Disk (DVD)), or a similar storage medium, or a combination thereof.

The systems, apparatuses, modules or units described in the above embodiments may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For ease of descriptions, the above apparatuses are divided into different units based on functionality for descriptions. Of course, the functions of different units may be implemented in a same or a plurality of hardware and/or software when practicing the present disclosure.

The persons skilled in the art should understand that the embodiments of the present disclosure may be provided as a method, a system, or a computer program product. Thus, entire hardware embodiments, entire software embodiments or embodiments combining software and hardware may be adopted in the present disclosure. Further, the present disclosure may be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in an embodiment of the present disclosure. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions may also be loaded on a computer or another programmable data processing devices, so that a series of operation steps can be executed on the computer or another programmable device to generate processing achieved by the computer, and thus instructions executable on the computer or another programmable device are provided for steps for realizing functions designated in one or more flows of the flowcharts and/or one or more blocks of the block diagrams.

## Claims

1. An in-situ flow detection method for a Generalized Bit Index Explicit Replication, G-BIER, service packet based on Internet Protocol Version 6, IPv6, multicast, the method being applied to a network device, and comprising:
in response to the network device serving as a Bit Forwarding Ingress Router, BFIR, of a G-BIER domain,
forwarding (101) a G-BIER service packet in the G-BIER domain when receiving a raw multicast service packet to be subjected to in-situ flow detection; and
reporting (102) detection data associated with in-situ flow detection information to a specified analyzer such that the analyzer detects network quality based on the reported detection data;
wherein the G-BIER service packet carries an IPv6 extension header and an IPv6 payload field;
the IPv6 payload field comprises the raw multicast service packet;
the IPv6 extension header comprises a Destination Option Header, DOH, wherein the DOH at least comprises: a G-BIER option and an in-situ flow detection option; the G-BIER option indicates performing packet forwarding in the G-BIER domain, and the in-situ flow detection option carries an in-situ flow detection flag and the in-situ flow detection information; the in-situ flow detection flag indicates performing in-situ flow detection; the in-situ flow detection information at least comprises: a Flow identity, ID, a Sequence Number, a Timestamp Received and a Timestamp Sent; the Flow ID and the Sequence Number are self-defined by the BFIR and prohibited from being modified in the G-BIER domain after being self-defined; the Flow ID is determined according to packet characteristics, wherein Flow IDs of different packets having different packet characteristics are different; the Sequence Number represents a sequence for forwarding each of packets having same packet characteristics; the Timestamp Received indicates a timestamp of receiving a packet; and the Timestamp Sent indicates a timestamp of sending a packet.

2. The method according to claim 1, further comprising:
in response to the network device serving as a bit forwarding egress router, BFER, in the G-BIER domain,
recording (901) the in-situ flow detection information carried in the in-situ flow detection option in the G-BIER service packet when receiving the G-BIER service packet;
recovering (901) the G-BIER service packet to the raw multicast service packet to be forwarded to a multicast receiver; and
reporting (902) a timestamp of receiving the G-BIER service packet and the detection data related to the recorded in-situ flow detection information to the analyzer.

3. The method according to claim 1, wherein the in-situ flow detection information further comprises:
a timestamp format, TF;
wherein the Timestamp Received and the Timestamp Sent follow the timestamp format.

4. The method according to claim 1, further comprising:
in response to the network device serving as an intermediate Bit Forwarding Router, BFR, device between the BFIR and a bit forwarding egress router, BFER, in the G-BIER domain,
if G-BIER in-situ flow detection is supported, updating (801) the in-situ flow detection information in the in-situ flow detection option carried in the G-BIER service packet when receiving the G-BIER service packet and forwarding the updated G-BIER service packet in the G-BIER domain; and
reporting (802) the detection data related to the in-situ flow detection information in the in-situ flow detection option carried in the updated G-BIER service packet to the analyzer.

5. The method according to claim 4, wherein updating (801) the in-situ flow detection information in the in-situ flow detection option carried in the G-BIER service packet comprises:
updating the Timestamp Received in the in-situ flow detection information in the in-situ flow detection option carried in the G-BIER service packet to a timestamp of receiving the G-BIER service packet; updating the Timestamp Sent in the in-situ flow detection information in the in-situ flow detection option carried in the G-BIER service packet to a timestamp of sending the updated G-BIER service packet; or,
adding the timestamp of receiving the G-BIER service packet in the Timestamp Received in the in-situ flow detection information in the in-situ flow detection option carried in the G-BIER service packet; adding the timestamp of sending the updated G-BIER service packet in the Timestamp Sent in the in-situ flow detection information in the in-situ flow detection option carried in the G-BIER service packet.

6. The method according to claim 4, wherein the in-situ flow detection information further comprises: at least one Type-Length-Value, TLV, and each TLV carries at least one path detection parameter; when the in-situ flow detection is used to detect a delay of network transmission, the path detection parameter at least comprises a delay parameter; when the in-situ flow detection is used to perform statistics of packet loss, the path detection parameter at least comprises a number of lost packets;
updating (801) the in-situ flow detection information in the in-situ flow detection option carried in the G-BIER service packet comprises:
updating the Timestamp Received in the in-situ flow detection information in the in-situ flow detection option carried in the G-BIER service packet to a timestamp of receiving the G-BIER service packet; updating the Timestamp Sent in the in-situ flow detection information in the in-situ flow detection option carried in the G-BIER service packet to a timestamp of sending the updated G-BIER service packet, and filling at least one path detection parameter in at least one TLV; or,
adding the timestamp of receiving the G-BIER service packet in the Timestamp Received in the in-situ flow detection information in the in-situ flow detection option carried in the G-BIER service packet; adding the timestamp of sending the updated G-BIER service packet in the Timestamp Sent in the in-situ flow detection information in the in-situ flow detection option carried in the G-BIER service packet, and filling at least one path detection parameter in at least one TLV.

7. The method according to claim 1, wherein the in-situ flow detection flag occupies 8 bits;
Bit0 of the in-situ flow detection flag is a delay detection flag, and Bit1 of the in-situ flow detection flag is a packet loss detection flag; the Bit0 is a lowest bit of the in-situ flow detection flag, and the Bit1 is a bit adjacent to the Bit0 in the in-situ flow detection flag.

8. The method according to claim 1, wherein,
in response to that the in-situ flow detection is Edge-to-Edge detection, the G-BIER option is before the in-situ flow detection option in the DOH;
in response to that the in-situ flow detection is hop-by-hop detection, the G-BIER option is after the in-situ flow detection option in the DOH.

9. The method according to claim 1, further comprising:
in response to the network device serving as an intermediate device between the BFIR and a bit forwarding egress router, BFER, in the G-BIER domain,
if G-BIER in-situ flow detection is not supported, forwarding the G-BIER service packet in the G-BIER domain according to a destination Internet Protocol, IP, address of the G-BIER service packet when receiving the G-BIER service packet.

10. An electronic device, comprising: a processor and a machine readable storage medium;
the machine readable storage medium stores machine executable instructions executable by the processor; and
the processor is configured to execute the machine executable instructions to implement the steps of the method according to any one of claims 1-9.

11. A computer program including instructions executed by a computer to implement the method according to any one of claims 1-9.

12. A machine readable storage medium storing computer instructions, wherein the computer instructions are executed by a processor to implement the method according to any one of claims 1-9.

## Patentansprüche

1. In-situ-Flusserkennungsverfahren für ein G-BIER-Dienstpaket (Generalized Bit Index Explicit Replication, generalisierte Bitindex-explizite Replikation), das auf Internet Protocol Version 6, IPv6, Multicast basiert, wobei das Verfahren auf eine Netzwerkvorrichtung angewendet wird und Folgendes umfasst:
als Reaktion darauf, dass die Netzwerkvorrichtung als BFIR (Bit Forwarding Ingress Router, Bitweiterleitungs-Eingangsrouter) einer G-BIER-Domäne dient,
Weiterleiten (101) eines G-BIER-Dienstpakets in der G-BIER-Domäne, wenn ein rohes Multicast-Dienstpaket empfangen wird, das einer In-situ-Flusserkennung unterzogen werden soll; und
Melden (102) von Erkennungsdaten, die mit In-situ-Flusserkennungsinformationen verbunden sind, an einen spezifizierten Analysator, so dass der Analysator die Netzwerkqualität auf der Grundlage der gemeldeten Erkennungsdaten erkennt;
wobei das G-BIER Dienstpaket einen IPv6-Erweiterungs-Header und ein IPv6-Nutzlastfeld trägt;
das IPv6-Nutzlastfeld das rohe Multicast-Dienstpaket umfasst;
der IPv6-Erweiterungs-Header einen Zieloptions-Header (Destination Option Header, DOH) umfasst, wobei der DOH mindestens Folgendes umfasst: eine G-BIER-Option und eine In-Situ-Flusserkennungsoption; wobei die G-BIER-Option die Durchführung der Paketweiterleitung in der G-BIER-Domäne anzeigt, und die In-Situ-Flusserkennungsoption eine In-Situ-Flusserkennungsmarkierung und die In-Situ-Flusserkennungsinformationen trägt; die In-Situ-Flusserkennungsmarkierung die Durchführung der In-Situ-Flusserkennung anzeigt; die In-Situ-Flusserkennungsinformationen mindestens Folgendes umfassen: eine Flussidentität, ID, eine Sequenznummer, einen Zeitstempel Empfangen und einen Zeitstempel Gesendet; wobei die Fluss-ID und die Sequenznummer vom BFIR selbst definiert werden und in der G-BIER-Domäne nicht mehr geändert werden dürfen, nachdem sie selbst definiert wurden; die Fluss-ID entsprechend den Paketeigenschaften bestimmt wird, wobei die Fluss-IDs verschiedener Pakete mit unterschiedlichen Paketeigenschaften unterschiedlich sind; die Sequenznummer eine Sequenz für die Weiterleitung jedes der Pakete mit denselben Paketeigenschaften darstellt; der Zeitstempel Empfangen einen Zeitstempel des Empfangs eines Pakets angibt; und der Zeitstempel Gesendet einen Zeitstempel des Sendens eines Pakets angibt.

2. Verfahren nach Anspruch 1, des Weiteren umfassend:
als Reaktion darauf, dass die Netzwerkvorrichtung als BFER (Bit Forwarding Egress Router, Bitweiterleitungs-Ausgangsrouter) in der G-BIER-Domäne dient,
Aufzeichnen (901) der in der In-Situ-Flusserkennungsoption enthaltenen In-Situ-Flusserkennungsinformationen im G-BIER-Dienstpaket, wenn das G-BIER-Dienstpaket empfangen wird;
Wiederherstellen (901) des G-BIER-Dienstpakets in das rohe Multicast-Dienstpaket, das an einen Multicast-Empfänger weitergeleitet werden soll; und
Melden (902) eines Zeitstempels des Empfangs des G-BIER-Dienstpakets und der Erkennungsdaten, die sich auf die aufgezeichneten In-situ-Flusserkennungsinformationen beziehen, an den Analysator.

3. Verfahren nach Anspruch 1, wobei die In-situ-Flusserkennungsinformationen des Weiteren umfassen:
ein Zeitstempelformat, TF;
wobei der Zeitstempel Empfangen und der Zeitstempel Gesendet dem Zeitstempelformat folgen.

4. Verfahren nach Anspruch 1, des Weiteren umfassend:
als Reaktion darauf, dass die Netzwerkvorrichtung als zwischengeschaltete BFR-Vorrichtung (Bit Forwarding Router, Bitweiterleitungsrouter) zwischen dem BFIR und einem BFER (Bit Forwarding Egress Router, Bitweiterleitungs-Ausgangsrouter) in der G-BIER-Domäne dient,
wenn die G-BIER In-Situ-Flusserkennung unterstützt wird, Aktualisieren (801) der In-Situ-Flusserkennungsinformationen in der In-Situ-Flusserkennungsoption, die in dem G-BIER-Dienstpaket enthalten ist, wenn das G-BIER-Dienstpaket empfangen wird, und Weiterleiten des aktualisierten G-BIER-Dienstpakets in der G-BIER-Domäne; und
Melden (802) der Erkennungsdaten, die sich auf die In-situ-Flusserkennungsinformationen in der In-situ-Flusserkennungsoption beziehen, die in dem aktualisierten G-BIER-Dienstpaket getragen wird, an den Analysator.

5. Verfahren nach Anspruch 4, wobei das Aktualisieren (801) der In-Situ-Flusserkennungsinformationen in der In-Situ-Flusserkennungsoption, die in dem G-BIER-Dienstpaket getragen wird, umfasst:
Aktualisieren des Zeitstempels Empfangen in den In-Situ-Flusserkennungsinformationen in der In-Situ-Flusserkennungsoption, die in dem G-BIER-Dienstpaket getragen wird, auf einen Zeitstempel des Empfangs des G-BIER-Dienstpakets; Aktualisieren des Zeitstempels Gesendet in den In-Situ-Flusserkennungsinformationen in der In-Situ-Flusserkennungsoption, die in dem G-BIER-Dienstpaket getragen wird, auf einen Zeitstempel des Sendens des aktualisierten G-BIER-Dienstpakets; oder,
Hinzufügen des Zeitstempels des Empfangs des G-BIER-Dienstpakets in den Zeitstempel Empfangen in den In-Situ-Flusserkennungsinformationen in der In-Situ-Flusserkennungsoption, die in dem G-BIER-Dienstpaket getragen wird; Hinzufügen des Zeitstempels des Sendens des aktualisierten G-BIER-Dienstpakets in den Zeitstempel Gesendet in den In-Situ-Flusserkennungsinformationen in der In-Situ-Flusserkennungsoption, die in dem G-BIER-Dienstpaket getragen wird.

6. Verfahren nach Anspruch 4, wobei die In-situ-Flusserkennungsinformationen des Weiteren umfassen: mindestens einen Typ-Längen-Wert (Type-Length-Value, TLV), und jeder TLV trägt mindestens einen Pfaderkennungsparameter; wobei, wenn die In-situ-Flusserkennung verwendet wird, um eine Verzögerung der Netzwerkübertragung zu erkennen, der Pfaderkennungsparameter mindestens einen Verzögerungsparameter umfasst; wenn die In-situ-Flusserkennung verwendet wird, um Statistiken über Paketverluste durchzuführen, der Pfaderkennungsparameter mindestens eine Anzahl verlorener Pakete umfasst;
wobei das Aktualisieren (801) der In-Situ-Flusserkennungsinformationen in der In-Situ-Flusserkennungsoption, die in dem G-BIER-Dienstpaket getragen wird, umfasst:
Aktualisieren des Zeitstempels Empfangen in den In-Situ-Flusserkennungsinformationen in der In-Situ-Flusserkennungsoption, die in dem G-BIER-Dienstpaket getragen wird, auf einen Zeitstempel des Empfangs des G-BIER-Dienstpakets; Aktualisieren des Zeitstempels Gesendet in den In-Situ-Flusserkennungsinformationen in der In-Situ-Flusserkennungsoption, die in dem G-BIER-Dienstpaket getragen wird, auf einen Zeitstempel des Sendens des aktualisierten G-BIER-Dienstpakets, und Ausfüllen mindestens eines Pfaderkennungsparameters in mindestens einem TLV; oder,
Hinzufügen des Zeitstempels des Empfangs des G-BIER-Dienstpakets in den Zeitstempel Empfangen in den In-Situ-Flusserkennungsinformationen in der In-Situ-Flusserkennungsoption, die in dem G-BIER-Dienstpaket getragen wird; Hinzufügen des Zeitstempels des Sendens des aktualisierten G-BIER-Dienstpakets in den Zeitstempel Gesendet in den In-Situ-Flusserkennungsinformationen in der In-Situ-Flusserkennungsoption, die in dem G-BIER-Dienstpaket getragen wird, und Ausfüllen mindestens eines Pfaderkennungsparameters in mindestens einem TLV.

7. Verfahren nach Anspruch 1, wobei die In-situ-Flusserkennungsmarkierung 8 Bits belegt;
wobei Bit0 der In-Situ-Flusserkennungsmarkierung eine Verzögerungserkennungsmarkierung ist, und Bit1 der In-Situ-Flusserkennungsmarkierung eine Paketverlusterkennungsmarkierung ist; das Bit0 ein niedrigstes Bit der In-Situ-Flusserkennungsmarkierung ist, und das Bit1 ein Bit neben dem Bit0 in der In-Situ-Flusserkennungsmarkierung ist.

8. Verfahren nach Anspruch 1, wobei,
als Reaktion darauf, dass es sich bei der In-situ-Flusserkennung um eine Edge-to-Edge-Erkennung handelt, die G-BIER-Option im DOH vor der In-situ-Flusserkennungsoption steht;
als Reaktion darauf, dass es sich bei der In-situ-Flusserkennung um eine Hop-by-Hop-Erkennung handelt, die G-BIER-Option im DOH nach der In-situ-Flusserkennungsoption steht.

9. Verfahren nach Anspruch 1, des Weiteren umfassend:
als Reaktion darauf, dass die Netzwerkvorrichtung als zwischengeschaltete Vorrichtung zwischen dem BFIR und einem BFER (Bit Forwarding Egress Router, Bitweiterleitungs-Ausgangsrouter) in der G-BIER-Domäne dient,
wenn die G-BIER-In-situ-Flusserkennung nicht unterstützt wird, Weiterleiten des G-BIER-Dienstpakets in der G-BIER-Domäne gemäß einer Ziel-Internetprotokoll-Adresse (IP) des G-BIER-Dienstpakets beim Empfang des G-BIER-Dienstpakets.

10. Elektronische Vorrichtung, die Folgendes umfasst: einen Prozessor und ein maschinenlesbares Speichermedium;
wobei das maschinenlesbare Speichermedium maschinenausführbare Befehle speichert, die von dem Prozessor ausgeführt werden können; und
der Prozessor dazu konfiguriert ist, die maschinenausführbaren Befehle auszuführen, um die Schritte des Verfahrens nach einem der Ansprüche 1-9 zu implementieren.

11. Computerprogramm mit Befehlen, die von einem Computer ausgeführt werden, um das Verfahren nach einem der Ansprüche 1 bis 9 zu implementieren.

12. Maschinenlesbares Speichermedium, das Computerbefehle speichert, wobei die Computerbefehle von einem Prozessor ausgeführt werden, um das Verfahren nach einem der Ansprüche 1-9 zu implementieren.

## Revendications

1. Procédé de détection de flux in-situ pour un paquet de service de réplication explicite à indexation de bits généralisée, G-BIER, basé sur une multidiffusion de protocole Internet version 6, IPv6, le procédé étant appliqué à un dispositif de réseau, et comprenant :
en réponse au fait que le dispositif de réseau sert de routeur d'entrée de transfert de bits, BFIR, d'un domaine G-BIER,
le transfert (101) d'un paquet de service G-BIER dans le domaine G-BIER lors de la réception d'un paquet de service multidiffusion brut devant être soumis à une détection de flux in-situ ; et
la signalisation (102) de données de détection associées à des informations de détection de flux in-situ à un analyseur spécifié de sorte que l'analyseur détecte une qualité de réseau sur la base des données de détection signalées ;
dans lequel le paquet de service G-BIER transporte un en-tête d'extension IPv6 et un champ de charge utile IPv6 ;
le champ de charge utile IPv6 comprend le paquet de service multidiffusion brut ;
l'en-tête d'extension IPv6 comprend un en-tête d'options de destination, DOH, dans lequel le DOH comprend au moins : une option G-BIER et une option de détection de flux in-situ ; l'option G-BIER indique l'exécution du transfert de paquet dans le domaine G-BIER, et l'option de détection de flux in-situ transporte un drapeau de détection de flux in-situ et les informations de détection de flux in-situ ; le drapeau de détection de flux in-situ indique l'exécution d'une détection de flux in-situ ; les informations de détection de flux in-situ comprennent au moins : une identité, ID, de flux, un numéro de séquence, un horodatage reçu et un horodatage envoyé ; l'ID de flux et le numéro de séquence sont auto-définis par le BFIR et ne peuvent être modifiés dans le domaine G-BIER après avoir été auto-définis - l'ID de flux est déterminé selon des caractéristiques de paquet, dans lequel des ID de flux de différents paquets ayant des caractéristiques de paquet différentes sont différents ; le numéro de séquence représente une séquence pour transférer chacun des paquets ayant les mêmes caractéristiques de paquet ; l'horodatage reçu indique un horodatage de réception d'un paquet ; et l'horodatage envoyé indique un horodatage d'envoi d'un paquet.

2. Procédé selon la revendication 1, comprenant en outre :
en réponse au fait que le dispositif de réseau sert de routeur de sortie de transfert de bits, BFER, dans le domaine G-BIER,
l'enregistrement (901) des informations de détection de flux in-situ transportées dans l'option de détection de flux in-situ dans le paquet de service G-BIER lors de la réception du paquet de service G-BIER ;
la restauration (901) du paquet de service G-BIER en paquet de service multidiffusion brut à transférer à un récepteur multidiffusion ; et
la signalisation (902) d'un horodatage de réception du paquet de service G-BIER et des données de détection liées aux informations de détection de flux in-situ enregistrées à l'analyseur.

3. Procédé selon la revendication 1, dans lequel les informations de détection de flux in-situ comprennent en outre :
un format d'horodatage, TF ;
dans lequel l'horodatage reçu et l'horodatage envoyé suivent le format d'horodatage.

4. Procédé selon la revendication 1, comprenant en outre :
en réponse au fait que le dispositif de réseau sert de dispositif intermédiaire de routeur de transfert de bits, BFR, entre le BFIR et un routeur de sortie de transfert de bits, BFER, dans le domaine G-BIER,
si la détection de flux in-situ G-BIER est prise en charge, la mise à jour (801) des informations de détection de flux in-situ dans l'option de détection de flux in-situ transportée dans le paquet de service G-BIER lors de la réception du paquet de service G-BIER et le transfert du paquet de service G-BIER mis à jour dans le domaine G-BIER ; et
la signalisation (802) des données de détection liées aux informations de détection de flux in-situ dans l'option de détection de flux in-situ transportée dans le paquet de service G-BIER mis à jour à l'analyseur.

5. Procédé selon la revendication 4, dans lequel la mise à jour (801) des informations de détection de flux in-situ dans l'option de détection de flux in-situ transportée dans le paquet de service G-BIER comprend :
la mise à jour de l'horodatage reçu dans les informations de détection de flux in-situ dans l'option de détection de flux in-situ transportée dans le paquet de service G-BIER à un horodatage de réception du paquet de service G-BIER ; le mise à jour de l'horodatage envoyé dans les informations de détection de flux in-situ dans l'option de détection de flux in-situ transportée dans le paquet de service G-BIER à un horodatage d'envoi du paquet de service G-BIER mis à jour ; ou,
l'ajout de l'horodatage de réception du paquet de service G-BIER dans l'horodatage reçu dans les informations de détection de flux in-situ dans l'option de détection de flux in-situ transportée dans le paquet de service G-BIER ; l'ajout de l'horodatage d'envoi du paquet de service G-BIER mis à jour dans l'horodatage envoyé dans les informations de détection de flux in-situ dans l'option de détection de flux in-situ transportée dans le paquet de service G-BIER.

6. Procédé selon la revendication 4, dans lequel les informations de détection de flux in-situ comprend en outre : au moins un schéma Type-Longueur-Valeur, TLV, et chaque schéma TLV transporte au moins un paramètre de détection de trajet ; lorsque la détection de flux in-situ est utilisée pour détecter un retard de transmission de réseau, le paramètre de détection de trajet comprend au moins un paramètre de retard ; lorsque la détection de flux in-situ est utilisée pour effectuer des statistiques de perte de paquets, le paramètre de détection de trajet comprend au moins un nombre de paquets perdus ;
la mise à jour (801) des informations de détection de flux in-situ dans l'option de détection de flux in-situ transportée dans le paquet de service G-BIER comprend :
la mise à jour de l'horodatage reçu dans les informations de détection de flux in-situ dans l'option de détection de flux in-situ transportée dans le paquet de service G-BIER à un horodatage de réception du paquet de service G-BIER ; la mise à jour de l'horodatage envoyé dans les informations de détection de flux in-situ dans l'option de détection de flux in-situ transportée dans le paquet de service G-BIER à un horodatage d'envoi du paquet de service G-BIER mis à jour, et le remplissage d'au moins un paramètre de détection de trajet dans au moins un schéma TLV ; ou
l'ajout de l'horodatage de réception du paquet de service G-BIER dans l'horodatage reçu dans les informations de détection de flux in-situ dans l'option de détection de flux in-situ transportée dans le paquet de service GBIER ; l'ajout de l'horodatage d'envoi du paquet de service G-BIER mis à jour dans l'horodatage envoyé dans les informations de détection de flux in-situ dans l'option de détection de flux in-situ transportée dans le paquet de service G-BIER, et le remplissage d'au moins un paramètre de détection de trajet dans au moins un schéma TLV.

7. Procédé selon la revendication 1, dans lequel le drapeau de détection de flux in-situ occupe 8 bits ;
Bit0 du drapeau de détection de flux in-situ est un drapeau de détection de retard, et Bit1 du drapeau de détection de flux in-situ est un drapeau de détection de perte de paquets ; le Bit0 est un bit le plus bas du drapeau de détection de flux in-situ, et le Bit1 est un bit adjacent au Bit0 dans le drapeau de détection de flux in-situ.

8. Procédé selon la revendication 1, dans lequel,
en réponse au fait que la détection de flux in-situ est une détection bord à bord, l'option G-BIER se situe avant l'option de détection de flux in-situ dans le DOH ;
en réponse au fait que la détection de flux in-situ est une détection saut par saut, l'option G-BIER se situe après l'option de détection de flux in-situ dans le DOH.

9. Procédé selon la revendication 1, comprenant en outre :
en réponse au fait que le dispositif de réseau sert de dispositif intermédiaire entre le BFIR et un routeur de sortie de transfert de bits, BFER, dans le domaine G-BIER,
si la détection de flux in-situ G-BIER n'est pas prise en charge, le transfert du paquet de service G-BIER dans le domaine G-BIER selon une adresse de protocole Internet, IP, de destination du paquet de service G-BIER lors de la réception du paquet de service G-BIER.

10. Dispositif électronique, comprenant : un processeur et un support de stockage lisible par machine ;
le support de stockage lisible par machine stocke des instructions exécutables par machine exécutables par le processeur ; et
le processeur est configuré pour exécuter les instructions exécutables par machine pour mettre en œuvre les étapes du procédé selon l'une quelconque des revendications 1 à 9.

11. Programme d'ordinateur comportant des instructions exécutées par un ordinateur pour mettre en œuvre le procédé selon l'une quelconque des revendications 1 à 9.

12. Support de stockage lisible par machine stockant des instructions d'ordinateur, dans lequel les instructions d'ordinateur sont exécutées par un processeur pour mettre en œuvre le procédé selon l'une quelconque des revendications 1 à 9.
